# EUROPÄISCHE PATENTSCHRIFT

(11) **EP 3 623 680 B1**
(45) Veröffentlichungstag und Bekanntmachung des Hinweises auf die Patenterteilung: **09.03.2022**
(21) Anmeldenummer: 19192744.1
(22) Anmeldetag: 21.08.2019
(51) Int. Cl.: F16L 37/091

(54) **ANSCHLUSSVORRICHTUNG FÜR ROHRLEITUNGEN**
CONNECTOR DEVICE FOR PIPELINES
DISPOSITIF DE RACCORDEMENT POUR TUYAUTERIES

(30) Priorität: 17.09.2018 DE 102018122732
(43) Veröffentlichungstag der Anmeldung: 18.03.2020
(73) Patentinhaber: Voss Automotive GmbH, 51688 Wipperfürth (DE)
(72) Erfinder: KLEHR, Adrian, 58809 Neuenrade (DE); ENGELHARD, Frank, 42929 Wermelskirchen (DE); HESS, Jochem-Andreas, 51688 Wipperfürth (DE)
(74) Vertreter: Dr. Solf & Zapf Patent- und Rechtsanwalts PartG mbB

(56) Entgegenhaltungen:
- EP-A1- 2 508 784
- WO-A1-2009/068932
- WO-A1-2014/000911
- GB-A- 2 452 038
- JP-A- 2006 322 575

## Beschreibung

Die Erfindung betrifft eine Anschlussvorrichtung für Rohrleitungen mit einem Anschlusskörper mit einer Aufnahmeöffnung für eine mit einem Leitungsende in eine Einsteckrichtung einzusteckende Rohrleitung, wobei innerhalb der Aufnahmeöffnung eine Stützhülse derart koaxial angeordnet ist, dass das Leitungsende beim Einstecken mittels einer Montagekraft auf eine zylindrische Außenfläche der Stützhülse aufschiebbar ist, und innerhalb der Aufnahmeöffnung ein Halteelement zum Fixieren des eingesteckten Leitungsendes gegen Herausziehen gelagert ist, wobei innerhalb des Anschlusskörpers mindestens eine Umfangsdichtung angeordnet ist, die einen radial zwischen dem Leitungsende und dem Anschlusskörper gebildeten Ringspalt nach außen abdichtet, wobei die Umfangsdichtung ein haptisches Signal in Form einer sprungartigen Erhöhung des Einsteckwiderstandes erzeugt, wenn das Leitungsende auf die Umfangsdichtung trifft.

Eine derartige Anschlussvorrichtung ist aus der EP 2 864 685 A1 bekannt. Bei dieser Anschlussvorrichtung ergibt sich das Problem, dass es zu einem fehlerhaften Einstecken der Rohrleitung kommen kann, wenn die Rohrleitung nicht vollständig eingesteckt ist und es somit zu einem Austritt des in der Rohrleitung fließenden Druckmediums kommt, wodurch das gesamte System ausfallen kann. Diese Gefahr ist bei der gattungsgemäßen Anschlussvorrichtung auch deshalb besonders groß, da die Rohrleitung unmittelbar eingesteckt wird, und über die Einsteckkraft letztlich festgestellt wird, ob die Rohrleitung bis zum Anschlag eingeführt ist. Dabei kann der Fehler auftreten, dass die Leitung nicht ausreichend eingesteckt wird, weil der Anwender die notwendige Steckkraft nicht ausübt oder den Einsteckwiderstand der Umfangsdichtung als Endanschlag fehlinterpretiert.

Bei bekannten Lösungen zur Überprüfung der korrekten Einsteckung der Rohrleitung ist es bekannt, mittels akustischer Signale dem Anwender eine Rückmeldung zu geben, wenn das Leitungsende eine definierte Einstecktiefe passiert. Nachteilig ist, dass diese Signalisierung in der Praxis, insbesondere in lauten Montagehallen, kaum bis nicht wahrnehmbar ist und bauartbedingt innerhalb des Anschlusskörpers einen großen Platzbedarf hat.

Das Dokument WO 2009/068932A1 offenbart eine Anschlussvorrichtung zum Einstecken eines Leitungsendes, wobei eine Umfangsdichtung den Einsteckwiderstand erhöht und eine Überprüfung der Montage mittels eines akustischen Signals ermöglicht wird.

Es ist ebenfalls bekannt, auf der Rohrleitung vom Leitungsende beabstandete farbige Kennzeichnungen aufzutragen, die die Einstecktiefe signalisieren. Nachteilig ist, dass diese auf jeder Rohrleitung vom Anwender ausgemessen und aufgetragen werden müssen und bei schlechten Lichtverhältnissen oder bei Montagen an nicht ersichtlichen Stellen, die aber durchaus mit den Händen des Monteurs erreichbar sind, z. B. hinter einem anderen Teil, nicht überprüfbar.

Der Erfindung liegt die Aufgabe zugrunde, eine zuverlässige Überprüfung der bekannten Anschlussvorrichtung schon bei der Montage und vor der Inbetriebnahme zu gewährleisten.

Die Aufgabe wird erfindungsgemäß durch die Merkmale des kennzeichnenden Teils des Anspruchs 1 gelöst, indem die Stützhülse eine oder mehrere radial elastische, sich in Einsteckrichtung erstreckende und mit einer Abspreizhöhe zur Einsteckrichtung radial von der zylindrischen Außenfläche der Stützhülse nach außen ragende Laschen aufweist und das Sensorelement an mindestens einem freien Ende am Außenumfang mindestens einer Lasche angeordnet ist, wobei das Sensorelement als ein radial nach außen weisender Vorsprung ausgebildet ist, damit die Stützhülse ein zweites haptisches Signal in Form einer sprungartigen Erhöhung des Einsteckwiderstandes abhängig einer Einstecktiefe des Leitungsendes in Einsteckrichtung hinter der Umfangsdichtung innerhalb des Aufnahmekörpers erzeugt. Besonders vorteilhaft kann der Anwender unabhängig von äußeren Einflüssen, wie Lärm, Einbaulagen oder schlechten Lichtverhältnissen, die korrekte Einsteckung erkennen. Weiterhin kann der Anwender die Rohrleitung vom Anschlusskörper trennen und erneut montieren. Vorteilhaft gewährleistet die Erfindung beim zweiten und jedem folgenden Einsteckvorgang eine genauso zuverlässige Überprüfung wie beim ersten Einsteckvorgang. Ebenso ist eine elektronische Überprüfung eines automatisierten Einsteckvorgangs möglich, insofern die angewendete Montagekraft elektronisch aufgezeichnet wird und daraus ein Widerstandsprofil ableitet, welches mittels eines Programms ausgewertet wird, und eine Fehlsteckung selbstständig und zuverlässig detektiert oder auf einem Bildschirm oder als Ausdruck einem Anwender zur Auswertung zur Verfügung gestellt wird.

In einer vorteilhaften Ausführungsform der Erfindung vermindert sich im Bereich der Stützhülse zwischen der Umfangsdichtung und dem Sensorelement sowie im Bereich der Stützhülse nach dem Sensorelement der Einsteckwiderstand auf einen Zwischenwiderstand, welcher insbesondere größer ist als der Widerstandswert unmittelbar vor der Umfangsdichtung. Insbesondere wirkt beim Einsteckvorgang ab Erreichen des Dichtrings eine Vorspannkraft des Dichtrings auf das Rohr, daher vermindert sich der Einsteckwiderstand insbesondere, wenn sich das Leitungsende im Bereich zwischen der Umfangsdichtung und dem Sensorelement sowie im Bereich nach dem Sensorelement befindet auf den Zwischenwiderstand, welcher insbesondere größer ist als der Widerstandswert unmittelbar vor der Umfangsdichtung. Vorzugsweise ist der Zwischenwiderstand insbesondere durch Schmierung des Dichtrings abgeschwächt. Durch den Zwischenwiderstand sind die haptischen Signale für den Anwender noch leichter zu erkennen. Insbesondere kann das jeweilige haptische Signal erhöht und dadurch kenntlicher gemacht werden, weil der Anwender nur kurzzeitig den erhöhten Einsteckwiderstand überwinden muss.

Gemäß Erfindung bildet die Stützhülse in Einsteckrichtung hinter dem Sensorelement einen unüberwindbaren Rohranschlag. Dieser Rohranschlag bildet vorteilhaft ein endgültiges Ende für das Leitungsende. Eine korrekte Steckung ist gewährleistet, wenn das Leitungsende das zweite haptische Signal passiert, wobei der Rohranschlag eine endgültige tiefste Einsteckmöglichkeit für das Leitungsende bildet und insbesondere ein zusätzliches drittes haptisches Signal ist, welches dem Anwender ergänzend Sicherheit vermittelt.

Weitere vorteilhafte Ausgestaltungen der Erfindung ergeben sich aus der folgenden Figurenbeschreibung und den abhängigen Unteransprüchen.

Es zeigen:
- Fig. 1a: einen Längsschnitt in Einsteckrichtung durch eine erfindungsgemäße Ausführungsform einer erfindungsgemäßen Anschlussvorrichtung mit voll eingesteckter Rohrleitung,
- Fig. 1b: eine vergrößerte Darstellung der Einzelheit A in Fig. 1a,
- Fig. 2: einen Längsschnitt in Einsteckrichtung durch die erfindungsgemäße Ausführungsform gemäß Fig. 1a mit einer fehlerhaft teilweise eingesteckten Rohrleitung,
- Fig. 3: eine perspektivische Ansicht einer Stützhülse der Ausführungsform gemäß Fig. 1a,
- Fig. 4a: einen Längsschnitt in Einsteckrichtung durch die erfindungsgemäße Stützhülse gemäß Fig. 1a,
- Fig. 4b: eine vergrößerte Darstellung der Einzelheit C in Fig. 4a,
- Fig. 4c: eine vergrößerte Darstellung der Einzelheit D in Fig. 4b,
- Fig. 5a: einen Längsschnitt in Einsteckrichtung durch die erfindungsgemäße Stützhülse gemäß Fig. 1a während der Montage einer ersten Rohrleitung,
- Fig. 5b: einen Längsschnitt in Einsteckrichtung durch die erfindungsgemäße Stützhülse gemäß Fig. 1a während der Montage einer zweiten Rohrleitung, und
- Fig. 6: einen Montagekraftverlauf abhängig von der Einstecktiefe bei einer erfindungsgemäßen Anschlussvorrichtung gemäß Fig. 1.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

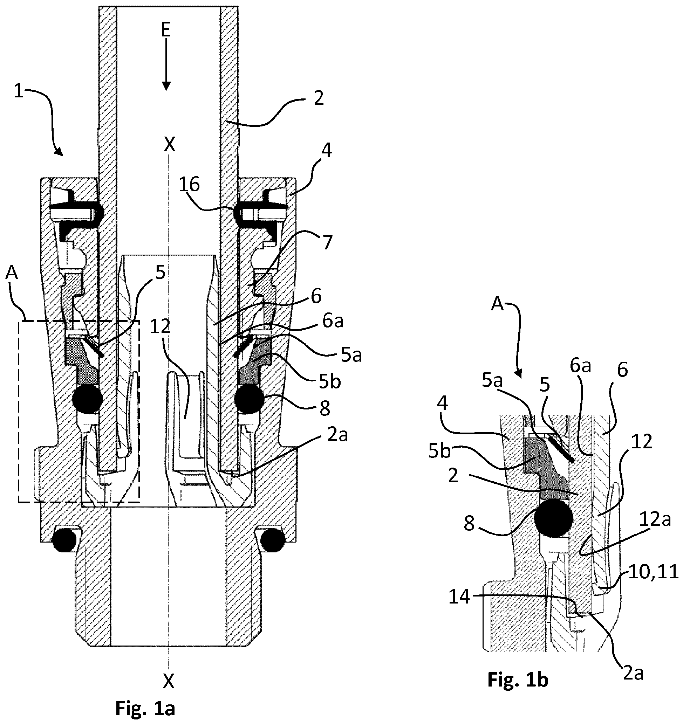

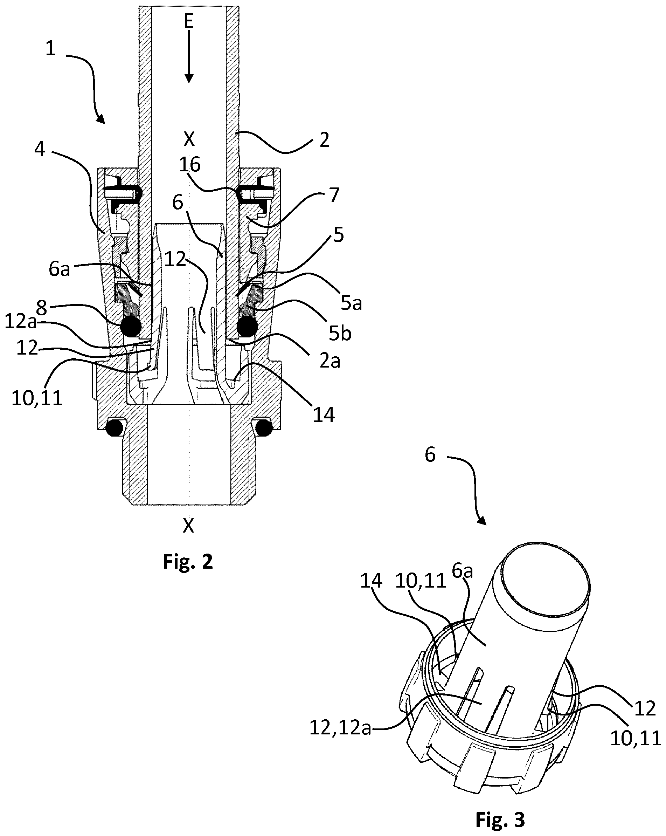

In Fig. 1a und 2 ist eine erfindungsgemäße Anschlussvorrichtung 1 zum schnellen und auch lösbaren Anschluss einer Rohrleitung 2 durch das einfache Einstecken eines Leitungsendes 2a in eine Aufnahmeöffnung eines Anschlusskörpers 4 veranschaulicht. Die Einsteckrichtung E ist in Fig. 1a und 2 jeweils mit einem Pfeil veranschaulicht. Da somit kein Anschlussdorn zum Aufstecken der Rohrleitung 2 vorhanden ist, kann auch von einem "Dornlos-Stecksystem" gesprochen werden. Zum Arretieren des eingesteckten Leitungsendes 2a gegen Herausziehen ist innerhalb der Aufnahmeöffnung ein Halteelement 5 gelagert, welches insbesondere als federelastischer Haltering mit einem äußeren Umfangsbereich und mit mehreren über den Umfang verteilt angeordneten, sich radial nach innen und schräg in Einsteckrichtung E geneigt erstreckenden und dadurch widerhakenartig kraft- und/oder formschlüssig gegen die äußere Umfangsfläche des Leitungsendes 2a wirkenden Haltezähnen ausgebildet ist. Zur Abdichtung der eingesteckten Rohrleitung 2 nach außen ist zudem innerhalb des Anschlusskörpers 4 mindestens eine Umfangsdichtung 8 gelagert, die einen radial zwischen dem Leitungsende 2a und dem Anschlusskörper 4 gebildeten Ringspalt nach außen abdichtet, wobei die Umfangsdichtung 8 ein haptisches Signal in Form einer sprungartigen Erhöhung des Einsteckwiderstandes erzeugt, wenn das Leitungsende 2a auf die Umfangsdichtung 8 trifft.

Der äußere Umfangsbereich des Halterings liegt im unverformten Zustand in einer zur Längsachse X-X der Anschlussvorrichtung 1 senkrechten Ebene, während die Haltezähne gemeinsam durch ihre Schrägstellung umlaufend konusförmig ausgerichtet sind. Die Haltezähne definieren mit ihren inneren Haltekanten einen Umkreis, dessen Durchmesser im unverformten Zustand kleiner als der Außendurchmesser der Rohrleitung 2 ist. Dadurch wirken die Haltekanten mit einer radialen Haltekraft insbesondere formschlüssig oder zumindest kraftformschlüssig gegen den Außenumfang des eingesteckten Leitungsendes 2a.

Der Haltering ist insbesondere mit seinem äußeren Umfangsbereich mit einem definiert begrenzten axialen und radialen Bewegungsspiel innerhalb des Anschlusskörpers 4 gelagert. Dieses axiale und radiale Bewegungsspiel wird durch beidseitige, axial gegenüberliegende Anlageabschnitte innerhalb des Anschlusskörpers 4 begrenzt. Vorteilhaft kann sich der Haltering durch das axiale und radiale Bewegungsspiel besser zu der einzusteckenden Leitung zentrieren. Weiterhin wirkt der Haltering am winkligen Übergang zwischen dem äußeren Umfangsbereich und den Haltezähnen derart mit einer innerhalb des Anschlusskörpers 4 am radial inneren Umfang der den ersten Anlageabschnitt bildenden radialen Anlagefläche vorgesehenen, umfangsgemäßen Kippkante 5a zusammen, dass beim Einstecken des Leitungsendes 2a durch dessen Anlage an den Haltezähnen der Haltering mit seinem äußeren Umfangsbereich gegen den ersten, unteren Anlageabschnitt gedrückt wird und wippenartig um die Kippkante 5a verschwenkt wird, bis der äußere Umfangsbereich radial außenseitig zur abgestützten Anlage an dem zweiten, axial gegenüberliegenden, oberen Anlageabschnitt gelangt. Wenn ausgehend von dieser Stellung das Leitungsende 2a weiter in Einsteckrichtung E bewegt wird, erfolgt eine elastische Biegeverformung im Wesentlichen nur noch im Bereich der die Kippkante 5a radial nach innen überragenden Haltezähne. Der Einsteckvorgang wird dann abgeschlossen, indem das Leitungsende 2a etwas gegen die Einsteckrichtung E zurückgezogen wird. Dadurch schneiden sich die Haltezähne formschlüssig oder zumindest kraftformschlüssig in den Außenumfang des Leitungsendes 2a ein.

Eine alternative bevorzugte Ausführung der Anschlussvorrichtung 1 sieht vor, dass das Halteelement 5 insbesondere als ein konusförmiger geschlitzter Haltering ausgebildet ist, dessen axiale und radiale Beweglichkeit durch den Anschlusskörper 4 und ein Konusteil begrenzt ist. Der konusförmige Haltering weist insbesondere eine in Einsteckrichtung E ausgerichtete und in die Aufnahmeöffnung ragende Schneidkante auf, so dass beim Einstecken des Leitungsendes 2a durch dessen Anlage an der Schneidkante der Haltering radial elastisch geweitet wird, wodurch die Rohrleitung 2 in Einsteckrichtung E bewegt werden kann. Der Einsteckvorgang wird dann abgeschlossen, indem das Leitungsende 2a etwas gegen die Einsteckrichtung E zurückgezogen wird. Dadurch schneidet sich die Schneidkante formschlüssig oder zumindest kraftformschlüssig in den Außenumfang des Leitungsendes 2a ein. Durch weiteres Zurückziehen und den Mitnahmeeffekt, den das Leitungsende 2a auf den konusförmigen Haltering ausübt, wird der konusförmige geschlitzte Haltering insbesondere gegen das zu diesem korrespondierend geformte und gelagerte Konusteil bewegt, wobei der konusförmige Haltering sowie das Konusteil bevorzugt derart zueinander geformt sind, dass bei der axialen Bewegung des konusförmigen Halterings gegen die Einsteckrichtung E der konusförmige Haltering durch das Konusteil radial zusammengedrückt wird, wodurch sich die Schneidkante zunehmend in das Leitungsende 2a einschneidet.

Innerhalb der Aufnahmeöffnung des Anschlusskörpers 4 ist eine Stützhülse 6 derart koaxial angeordnet, dass das Leitungsende 2a beim Einstecken auf eine zylindrische Außenfläche 6a der Stützhülse 6 aufschiebbar ist. Dadurch wird das eingesteckte Leitungsende 2a von der Stützhülse 6 radial abgestützt, so dass bei Beaufschlagung mit einer von dem Haltering bewirkten radialen Haltekraft Verformungen der Rohrleitung 2 im Wirkbereich des Halterings vermieden werden.

Die oben beschriebene Kippkante 5a für den Haltering kann mit Vorteil an einem Einsatzring 5b gebildet sein, der bevorzugt auch den ersten Anlageabschnitt in Form einer radial nach außen an die Kippkante 5a angrenzenden, zur Längsachse X-X senkrechten Stirnfläche aufweist. Die Kippkante 5a ist somit am Übergang zwischen der den ersten Anlageabschnitt bildenden Stirnfläche und einer innen angrenzenden Konusfläche gebildet.

Der Einsatz des Einsatzrings 5b in den Anschlusskörper 4 wird insbesondere als Übergangspassung umgesetzt. Hierbei ist insbesondere vorgesehen, dass der Einsatzring 5b innerhalb des Anschlusskörpers 4 mit seiner in Einsteckrichtung weisenden Stirnfläche gemeinsam mit einer dieser axial gegenüberliegenden Flankenfläche des Anschlusskörpers 4 eine Dichtungskammer für die Rohr-Umfangsdichtung 8 begrenzt. Bei der Umfangsdichtung 8 handelt es sich bevorzugt ebenfalls um einen O-Ring, der für eine Anwendung bei Druckluft-Rohrleitungen vorzugsweise aus EPDM (Ethylen-Propylen-Dien-Monomer) oder NBR (Nitrile Butadiene Rubber = Nitril Kautuschuk) besteht und für eine Anwendung bei Kraftstoff-Rohrleitungen aus einem Fluor-Elastomer.

Der Einsatzring 5b entkoppelt vorteilhafterweise die Bauräume für das Halteelement 5 einerseits und das Dichtelement 8 andererseits. Insbesondere in Kombination mit der Stützhülse 6 werden Exzentrizitäten und Ovalitäten der Rohrleitung 2 im Bereich zwischen Dichten und Halten vermieden bzw. kompensiert. Bevorzugt besteht der Einsatzring 5b aus einem Kunststoff, insbesondere POM ohne Glasfaserverstärkung, PBToder PA6.6, gegebenenfalls mit Glasfaser-Anteil GF30 %. Alternativ kann der Einsatzring 5b auch aus Metall, insbesondere Aluminium bestehen.

Für eine Lösbarkeit der eingesteckten und über den Haltering fixierten Rohrleitung 2 ist ein hülsenförmiges Löseelement 7 vorgesehen. Dieses Löseelement 7 greift derart axial verschiebbar in den Anschlusskörper 4 ein, dass durch Einschieben des Löseelementes 7 in Einsteckrichtung E der Haltering zur Freigabe des Leitungsendes 2a im Bereich der Haltezähne elastisch verformbar ist. Dazu wirkt das Löseelement 7 mit Betätigungsabschnitten gegen den Haltering, zum Beispiel gegen die Haltezähne.

Das Löseelement 7 ist bevorzugt innerhalb des Anschlusskörpers 4 über eine Verrastung gegen Demontage gehalten. Dazu weist das Löseelement 7 an seinem in Einsteckrichtung E weisenden Ende durch axiale Schlitze beabstandete Rastarme auf, die einendig an dem umfangsgemäß geschlossenen Ringteil angeformt sind, und die mit radial nach außen weisenden Rastnasen eine radiale Stufenfläche hintergreifen, wobei diese Stufenfläche durch ein hülsenförmiges Lagerelement gebildet ist. Insbesondere ist die Lageposition des Lagerelements innerhalb des Anschlusskörpers fixiert. Wie in Fig. 1a und 2 veranschaulicht, ist das Lagerelement auf axialer Höhe radial zwischen dem Anschlusskörper 4 und den Rastarmen angeordnet. Zur Arretierung des Lagerelements weist der Anschlusskörper 4 im Bereich des Lagerelements eine umlaufende Nut mit einem vergrößerten Durchmesser auf, wobei sich der Durchmesser der Nut in Einsteckrichtung E konisch wieder auf den Durchmesser im Bereich des Einsatzrings 5b reduziert. Das Lagerelement weist einen Körper auf, dessen in Einsteckrichtung E vorderster Grundkörper eine Stufenfläche für die Rastarme darstellt, weiterhin erstreckt sich der Körper des Lagerelements derart in Einsteckrichtung E, dass er mit einer in die Einsteckrichtung E gerichteten Oberfläche die Anlagefläche für das Halteelement 5, insbesondere für den äußeren Umfangsbereich, definiert. Insbesondere bildet das Lagerelement eine Nut zwischen der Anlagefläche für das Halteelement 5 und dem Einsatzring 5b, in der das Halteelement 5 insbesondere geringfügig radial- und axialverschiebbar gelagert ist. Vorzugsweise hält das Lagerelement die Rastarme des Löseelements 7, so dass das Löseelement 7 nicht axial gegen die Einsteckrichtung E aus dem Anschlusskörper 4 fallen kann.

In einer weiteren vorteilhaften Ausgestaltung sind die Rastarme mit dem umfangsgemäß geschlossenen Ringteil des Löseelementes 7 über scharnierartige Einschnürungen verbunden, wodurch die radiale Beweglichkeit der Rastarme für die Montage des Löseelements 7 in das Lagerelement begünstigt wird.

Wie in der Detailansicht gemäß Fig. 1b dargestellt, weist die Stützhülse 6 erfindungsgemäß mindestens ein Sensorelement 10, insbesondere einen Vorsprung 11 auf, der ein zweites haptisches Signal in Form einer sprungartigen Erhöhung des Einsteckwiderstandes abhängig einer Einstecktiefe des Leitungsendes 2a in Einsteckrichtung E hinter der Umfangsdichtung 8 innerhalb des Anschlusskörpers 4 erzeugt.

Fig. 2 zeigt einen Zustand, bei welchem das Leitungsende 2a noch nicht die Einstecktiefe des Sensorelements 10 passiert hat, folglich kommt es beim Montagezustand gemäß Fig. 2 noch nicht zu einer zweiten sprunghaften Erhöhung des Einsteckwiderstandes, wodurch der Anwender die Gewissheit hat, dass der Einsteckvorgang noch nicht abgeschlossen ist oder, wenn es nicht mehr möglich ist, die Leitung 2 bzw. das Leitungsende 2a tiefer in Einsteckrichtung E in den Anschlusskörper 4 zu stecken, dass ein Fehler, z. B. eine Verschmutzung, vorliegt.

Besonders vorteilhaft kann sich beim Einsteckvorgang im Bereich der Stützhülse 6 zwischen der Umfangsdichtung 8 und dem Sensorelement 10 sowie im Bereich der Stützhülse 6 hinter dem Sensorelement 10 der Einsteckwiderstand auf einen Zwischenwiderstand vermindern, welcher insbesondere größer ist als der Widerstandswert unmittelbar vor der Umfangsdichtung 8. Dadurch sind die haptischen Signale für den Anwender noch leichter zu erkennen. Weiterhin besteht dadurch die Möglichkeit, das erste und/oder zweite haptische Signal, d. h. die Einsteckwiderstände zu erhöhen, wodurch diese leichter wahrnehmbar sind. Vorzugsweise ist der Zwischenwiderstand insbesondere durch Schmierung des Dichtrings abgeschwächt.

Fig. 3 bis 4b zeigen eine erfindungsgemässe Ausführung der Stützhülse 6. Demnach weist die Stützhülse 6 insbesondere eine oder mehrere radial elastische, sich in Einsteckrichtung E erstreckende und mit einer Abspreizhöhe H zur Einsteckrichtung radial von der zylindrischen Außenfläche 6a der Stützhülse 6 nach außen ragende Laschen 12 auf. Gemäß dieser Ausführung wird die einzusteckende Rohrleitung 2 mittels einer Montagekraft auf die zylindrische Außenfläche 6a der Stützhülse 6 aufgeschoben, wobei die Laschen 12, abhängig von ihrer Abspreizhöhe H und einem Rohrinnendurchmesser der einzusteckenden Leitung 2, gegen eine innere Umfangsfläche der einzusteckenden Leitung 2 radial nach außen drücken.

Bevorzugt ist die Abspreizhöhe H am Ende eines Hebelarmes L der Lasche 12 insbesondere eine halbe Toleranz eines Innendurchmessers der einzusteckenden Rohrleitung 2 und wirkt als ein Toleranzausgleich. Der Toleranzausgleich sichert dahingehend die Einsteckung, dass fertigungsbedingte Toleranzen der einzusteckenden Rohrleitung 2 ausgeglichen werden und die Lasche 12, unabhängig davon, ob die Rohrleitung einen Mindestdurchmesser oder einen maximalen Durchmesser im Rahmen der Fertigungstoleranz hat, am Innendurchmesser der Rohrleitung 2 anliegt.

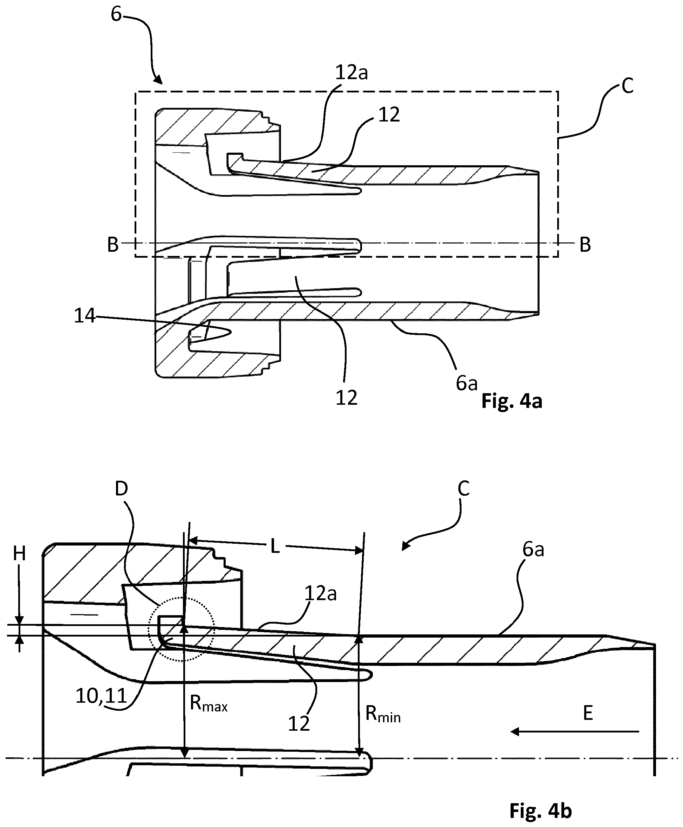

Fig. 4b zeigt eine praktische Ausführung einer Lasche 12, die insbesondere an einen bestimmten Rohrleitungstyp angepasst ist. Die Lasche 12 in Fig. 4b weist in Einsteckrichtung E gesehen zu am vorderen Ende der Lasche 12 einen Radius Rₘᵢₙ auf, welcher insbesondere auf die fertigungsbedingte kleinste Toleranz der Rohrleitung 2 ausgelegt ist, und in Einsteckrichtung E gesehen am hinteren Ende der Lasche 12 einen Radius Rₘₐₓ auf, der vorteilhaft auf die fertigungsbedingte größte Toleranz der Rohrleitung 2 ausgelegt ist.

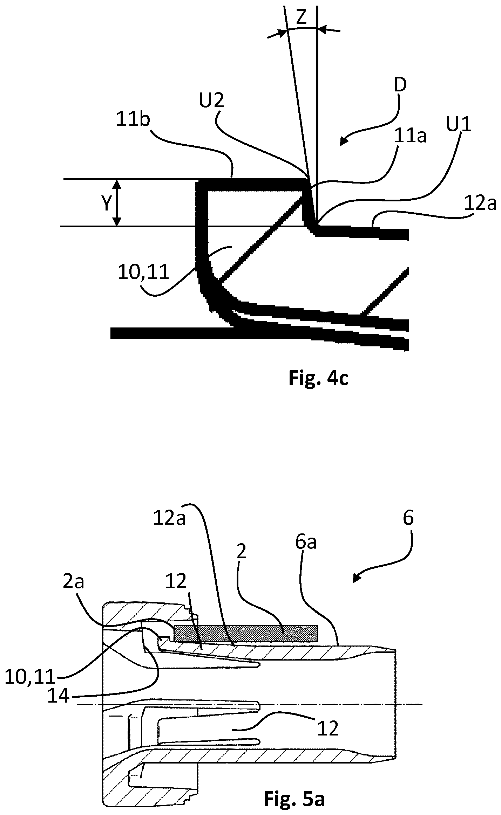

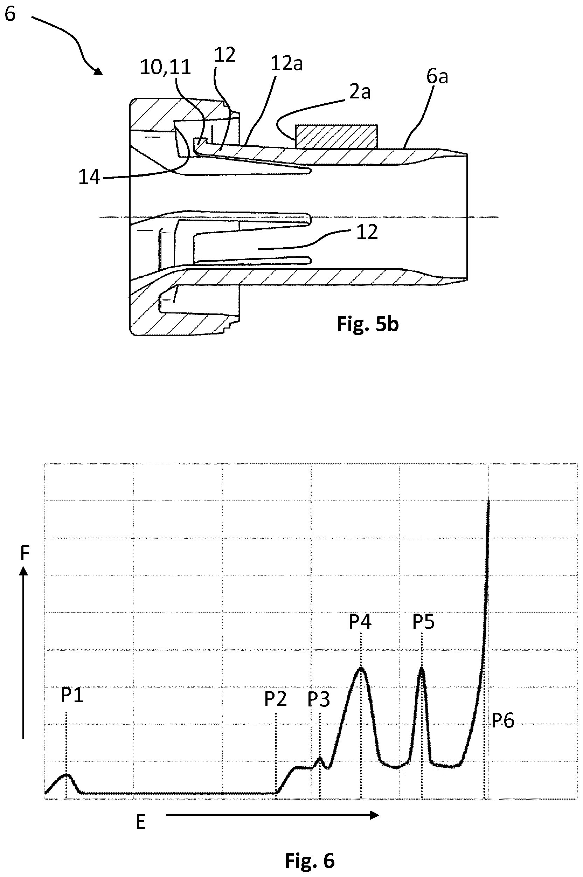

Fig. 5a zeigt diesbezüglich eine Rohrleitung 2 mit einem maximalen Innendurchmesser. In diesem Beispiel bewirkt die Abspreizung, dass die Rohrleitung 2, trotz eines fertigungsbedingten vergrößerten Innendurchmessers im Vergleich zu der Rohrleitung in Fig. 5b, sicher im Kontakt mit der Stützhülse 6, insbesondere den Laschen 12 ist. Fig. 5b stellt eine Rohrleitung 2 mit einem minimalen Innendurchmesser dar. Wird die Rohrleitung 2 im Beispiel 5b in Einsteckrichtung E bewegt, schwenken die elastischen Laschen 12 radial nach innen und ermöglichen die axiale Bewegung der Rohrleitung 2 in Einsteckrichtung E, wobei die Laschen 12 insbesondere stets Kontakt zu der Rohrleitung 2 haben. Beispielhaft für eine Rohrleitung 2 mit einem Außendurchmesser von 12 mm, einer Wandstärke von 1,5 mm, einem Innendurchmesser von 9 mm und einer Fertigungstoleranz von plus/minus 0,3 mm berechnet sich die Gesamttoleranz auf 0,6mm. Durch eine radiale Abspreizhöhe H von 0,3 mm der Lasche 12 ist der oben beschriebene Effekt sichergestellt. Besonders vorteilhaft an einem stets gewährleisteten Kontakt zwischen der Stützhülse 6 und der Rohrleitung 2 ist eine Arretierung der Rohrleitung 2 während und nach dem Einsteckvorgang. Weiterhin wird sichergestellt, dass das Sensorelement 10, insbesondere ein Vorsprung 11 gemäß Fig. 4c, eine sprungartige Erhöhung des Einsteckwiderstandes abhängig von der Einstecktiefe des Leitungsendes 2a in Einsteckrichtung E hinter der Umfangsdichtung 8 innerhalb des Anschlusskörpers 4 erzeugt.

Gemäß der bevorzugten Ausführung, vorteilhaft dargestellt in Fig. 4c, ist das Sensorelement 10 insbesondere an mindestens einem freien Ende, vorteilhaft mit dem Hebelarm L, am Außenumfang mindestens einer Lasche 12 angeordnet, wobei das Sensorelement 10 bevorzugt als ein radial nach außen weisender Vorsprung 11 ausgebildet ist. Insbesondere wird durch eine derartige Anordnung des Vorsprungs 11 am Ende der Lasche 12 das Sensorelement 10 in vollem Umfang von dem Leitungsende 2a beim Einstecken der Rohrleitung 2 in Einsteckrichtung erfasst. Durch das Ausmaß des Hebelarms L sowie die Elastizität der Lasche kann das zweite haptische Signal, d. h. der zweite Einsteckwiderstand, beeinflusst werden. Insbesondere eine niedrige Elastizität und ein kurzer Hebelarm L vergrößern den zweiten Einsteckwiderstand. Weiterhin kann durch eine Variation des Hebelarms L der Abstand zwischen dem ersten haptischen Signal der Umfangsdichtung 8 und des Sensorelements 10, insbesondere des Vorsprungs 11, an die anwendungsbezogenen Bedürfnisse anwenderfreundlich eingestellt werden.

Gemäß der Ausführung in Fig. 3 kann die erfindungsgemäße Stützhülse 6 insbesondere drei Laschen 12 aufweisen, wobei bevorzugt jede Lasche 12 jeweils ein Sensorelement 10, insbesondere einen Vorsprung 11 aufweist. Die Anzahl der Laschen 12 und insbesondere der Sensorelemente 10 bzw. der Vorsprünge 11 hat dabei unmittelbaren Einfluss auf das zweite haptische Signal, indem der oben beschriebene Effekt mit einer steigenden Anzahl der Laschen 12 verstärkt werden kann. Vorteilhaft sind, wie in Fig. 3 dargestellt, drei Laschen 12 gleichmäßig über den Umfang der Stützhülse 6 verteilt, um eine Zentralität beim Einstecken der Rohrleitung 2 zu erzeugen.

Gemäß der vorteilhaften Ausführung in Fig. 4c weist der Vorsprung 11 insbesondere eine erste Vorsprungsfläche 11a auf, die sich insbesondere in einem Winkel Z zu einer, zu der Längsachse X-X der Anschlussvorrichtung 1 senkrechten Ebene, von einer radial äußeren Umfangsfläche 12a der Lasche 12 radial nach außen erstreckt und bevorzugt einen überwindbaren Anschlag in Einsteckrichtung E für das Leitungsende 2a darstellt. Praktischerweise wird die Rohrleitung 2 beim Einsteckvorgang zunächst über die zylindrische Außenfläche 6a der Stützhülse 6 bis zu dem Bereich geschoben, ab welchem die Stützhülse 6 eine oder mehrere Laschen 12 angeordnet hat, wobei die Laschen 12 zusätzlich äußere Umfangsflächen 12a aufweisen. Ab dieser Einstecktiefe gleitet die Rohrleitung 2 weiter über die äußeren Umfangsflächen 12a der Laschen 12, wodurch das Leitungsende 2a insbesondere unmittelbar an den Vorsprung 11, bevorzugt gegen seine erste Vorsprungsfläche 11a geführt wird. Stößt das Leitungsende 2a gegen die erste Vorsprungsfläche 11a, wird das zweite haptische Signal erzeugt, d. h. der Einsteckwiderstand wird sprunghaft erhöht. Der Winkel Z erlaubt es, den Einsteckwiderstand sowie dessen Anstiegsrate zu beeinflussen, so bewirkt eine Vergrößerung des Winkels Z, dass das Leitungsende 2a leichter den Vorsprung 11 überwinden kann, wodurch der Einsteckwiderstand geringer und die Anstiegsrate flacher ist.

Bevorzugt kann der Vorsprung 11 eine zweite Vorsprungsfläche 11b aufweisen, die sich insbesondere in Einsteckrichtung E erstreckt und vorteilhaft an die erste Vorsprungsfläche 11a angrenzt, wobei die zweite Vorsprungsfläche 11b in einem Abstand Y zu der Lasche 12 radial nach außen versetzt angeordnet ist. Insbesondere kann durch den Abstand Y der zweiten Vorsprungsfläche 11b die radiale Erstreckung der ersten Vorprungsfläche 11a beeinflusst werden, wodurch insbesondere der Einsteckwiderstand des zweiten haptischen Signals beeinflusst wird.

Praktischerweise weist der Übergang U1 von der äußeren Umfangsfläche 12a der Lasche 12 auf die erste Vorsprungsfläche 11a des Vorsprungs 11 einen Radius auf. Vorteilhaft wird dadurch die Anstiegsrate des zweiten haptischen Signals abgeflacht und das Material der Leitung 2 im Bereich des Leitungsendes 2a geschont.

Dieser das Leitungsende 2a schonende Effekt wird gemäß einer weiteren vorteilhaften Ausführung ebenfalls genutzt, indem der Übergang U2 der ersten Vorsprungsfläche 11a auf die zweite Vorsprungsfläche 11b einen Radius aufweist. Weiterhin reduziert sich die Gefahr, dass das Leitungsende 2a beim Überwinden des Vorsprungs das Sensorelement 10 beschädigt oder durch einen scharfkantigen Übergang selbst beschädigt wird, wodurch sich Partikel lösen können, die in das System gelangen. Gemäß einer vorteilhaften Ausführung stellt die Laschen 12 den Einsteckwiderstand vorder Umfangsdichtung 8 insbesondere auf einen Basiswert ein. Dieser Basiswert wird insbesondere beeinflusst von dem Innendurchmesser der Rohrleitung 2 und der Abspreizhöhe H. Aus dem Verhältnis des Hebelarms L zu der Abspreizhöhe H kann weiterhin eingestellt werden, ab welcher Einstecktiefe der Einsteckwiderstand auf den Basiswert eingestellt werden soll. Der Basiswert sensibilisiert den Anwender für das darauffolgende erste und zweite haptische Signal. Weitere Faktoren, mit welchen der Basiswert eingestellt werden kann, ist die Anzahl sowie die Elastizität der Laschen 12 und der Reibungswiderstand, der durch den Kontakt der äußeren Umfangsflächen 12a der Laschen 12 mit der inneren Umfangsfläche der Rohrleitung 2 entsteht.

Die Stützhülse 6 bildet, wie in Fig. 1a und 1b dargestellt, in Einsteckrichtung E hinter dem Sensorelement 10, insbesondere hinter dem Vorsprung 11, einen unüberwindbaren Rohranschlag 14. Dieser Rohranschlag bildet vorteilhaft eine endgültige tiefste Einsteckmöglichkeit für das Leitungsende 2a und kann insbesondere als ein zusätzliches drittes haptisches Signal verwendet werden, welches dem Anwender ergänzend Sicherheit vermittelt.

Bevorzugt ist der Abstand in Einsteckrichtung E des höchsten Wertes des ersten Einsteckwiderstandes der Umfangsdichtung 8, des höchsten Wertes des zweiten Einsteckwiderstandes des Sensorelements 10 sowie des Rohranschlags 14 jeweils gleich.

Insbesondere kann es vorteilhaft sein, wenn der höchste Wert des ersten Einsteckwiderstandes der Umfangsdichtung 8 und der höchste Wert des zweiten Einsteckwiderstandes des Sensorelements 10 gleich sind.

Eine weitere vorteilhafte Ausführung sieht vor, dass die Stützhülse 6 insbesondere als ein einteiliges Formteil ausgebildet ist und die Laschen 12 sowie das Sensorelement 10 bzw. der Vorsprung 11 vorteilhaft angeformt sind. Weiterhin besteht die Stützhülse 6 bevorzugt aus Glasfasermaterial.

Fig. 6 zeigt beispielhaft einen vorteilhaften Verlauf der Montagekraft F abhängig von der Einstecktiefe E bei einer Anschlussvorrichtung 1 gemäß der Ausführung in Fig. 1. P1 in Fig. 6 kennzeichnet einen Anstieg der Montagekraft F, welche wegen eines erhöhten Einsteckwiderstands erforderlich ist, wobei dieser Einsteckwiderstand durch eine in der Aufnahmeöffnung des Anschlusskörpers 6 angeordnete innere Schmutzdichtung 16 erzeugt wird. P2 in Fig. 6 kennzeichnet die Einstecktiefe, ab welcher das Halteelement 5, insbesondere ein federelastischer Zahnring, zum Fixieren des eingesteckten Leitungsendes 2a in die Rohrleitung 2 eingreift. Die Einstecktiefe P3 kennzeichnet die Stelle, an welcher das Leitungsende 2a gegen die elastischen Laschen 12 trifft, wobei an dieser Stelle der Toleranzausgleich stattfindet. Dem folgt in einer Einstecktiefe an P4 die Spitze einer sprunghaften Erhöhung der Montagekraft F, die durch das erste haptische Signal der Umfangsdichtung 8, d. h. die erste sprunghafte Steigerung des Einsteckwiderstands, erzeugt wird. Gemäß der vorteilhaften Ausführung vermindert sich der Einsteckwiderstand nach P4 wieder auf den Zwischenwiderstand, welcher insbesondere durch die auf das Rohr wirkende Vorspannkraft des Dichtrings größer ist als der Widerstandswert unmittelbar vor der Umfangsdichtung 8. P5 in Fig. 6 ist P4 ähnelnd die Spitze einer sprunghaften Erhöhung der Montagekraft F, die durch das zweite haptische Signal des Sensorelements 10 bzw. wie in Fig. 1 dargestellt des Vorsprungs 11, d. h. die zweite sprunghafte Steigerung des Einsteckwiderstands, erzeugt wird. Gemäß der vorteilhaften Ausführung vermindert sich wie schon beim ersten haptischen Signal, siehe P4, der Einsteckwiderstand nach P5 wieder auf den Zwischenwiderstand. In der Einstecktiefe bei P6 hat das Leitungsende 2a einen an der Stützhülse 6 vorteilhaft ausgebildeten Rohranschlag 14 erreicht. Hat der Anwender insbesondere diesen Montagekraftverlauf bzw. diesen Einsteckwiderstandverlauf wahrgenommen, kann er von einer montagerichtigen Steckung der Rohrleitung 2 ausgehen.

Besonders vorteilhaft ist in Fig. 6 ergänzend dargestellt, dass bevorzugt der Abstand in Einsteckrichtung E des höchsten Wertes des ersten Einsteckwiderstandes bei P4 der Umfangsdichtung 8 und des höchsten Wertes des zweiten Einsteckwiderstandes bei P5 des Sensorelements 10 sowie der Abstand zum Rohranschlag 14 bei P6 jeweils gleich ist. Weiterhin ist insbesondere der höchste Wert des ersten Einsteckwiderstandes bei P4 der Umfangsdichtung 8 und der höchste Wert des zweiten Einsteckwiderstandes bei P5 gleich.

### Bezugszeichenliste

- 1: Anschlussvorrichtung
- 2: Rohrleitung
- 2a: Leitungsende
- 4: Anschlusskörper
- 5: Halteelement
- 5a: Kippkante
- 5b: Einsatzring
- 6: Stützhülse
- 6a: Außenfläche der Stützhülse
- 7: Löseelement
- 8: Umfangsdichtung
- 10: Sensorelement
- 11: Vorsprung
- 11a: Erste Vorsprungsfläche
- 11b: Zweite Vorsprungsfläche
- 12: Lasche
- 12a: Äußere Umfangsfläche der Lasche
- 14: Rohranschlag
- 16: Innere Schmutzdichtung
- U2: Übergang der ersten auf die zweite Vorsprungsfläche
- U1: Übergang der äußeren Umfangsfläche der Lasche auf die erste Vorsprungsfäche
- Rₘᵢₙ: Kleinster Laschenradius
- Rₘₐₓ: Größter Laschenradius
- P1: Punkt 1 im Bereich der inneren Schmutzdichtung
- P2: Punkt 2 im Bereich des Halteelements
- P3: Punkt 3 im Bereich des Toleranzausgleichs
- P4: Punkt 4 im Bereich der Umfangsdichtung
- P5: Punkt 5 im Bereich des Sensorelements
- P6: Punkt 6 im Bereich des Rohranschlags
- E: Einsteckrichtung
- F: Montagekraft
- H: Abspreizhöhe
- L: Hebelarm
- X: Längsachse der Anschlussvorrichtung
- Y: Radiale Versetzung der zweiten Vorsprungsfläche
- Z: Winkel

## Patentansprüche

1. Anschlussvorrichtung (1) für Rohrleitungen (2) mit einem Anschlusskörper (4) mit einer Aufnahmeöffnung für eine mit einem Leitungsende (2a) in eine Einsteckrichtung (E) einzusteckende Rohrleitung (2), wobei innerhalb der Aufnahmeöffnung eine Stützhülse (6) derart koaxial angeordnet ist, dass das Leitungsende (2a) beim Einstecken mittels einer Montagekraft auf eine zylindrische Außenfläche (6a) der Stützhülse (6) aufschiebbar ist, und innerhalb der Aufnahmeöffnung ein Halteelement (5) zum Fixieren des eingesteckten Leitungsendes gegen Herausziehen gelagert ist, wobei innerhalb des Anschlusskörpers mindestens eine Umfangsdichtung (8) angeordnet ist, die einen radial zwischen dem Leitungsende (2a) und dem Anschlusskörper (4) gebildeten Ringspalt nach außen abdichtet, wobei die Umfangsdichtung (8) ein haptisches Signal in Form einer sprungartigen Erhöhung des Einsteckwiderstandes erzeugt, wenn das Leitungsende (2a) auf die Umfangsdichtung trifft, wobei die Stützhülse (6) mindestens ein Sensorelement (10) aufweist, wobei die Stützhülse (6) in Einsteckrichtung (E) hinter dem Sensorelement (10, 11) einen unüberwindbaren Rohranschlag (14) bildet, **dadurch gekennzeichnet, dass** das Sensorelement ein zweites haptisches Signal in Form einer sprungartigen Erhöhung des Einsteckwiderstandes abhängig einer Einstecktiefe des Leitungsendes (2a) in Einsteckrichtung (E) hinter der Umfangsdichtung (8) innerhalb des Anschlusskörpers (4) erzeugt, die Stützhülse (6) eine oder mehrere radial elastische, sich in Einsteckrichtung (E) erstreckende und mit einer Abspreizhöhe (H) zur Einsteckrichtung radial von der zylindrischen Außenfläche (6a) der Stützhülse (6) nach außen ragende Laschen (12) aufweist und das Sensorelement (10) an mindestens einem freien Ende am Außenumfang mindestens einer Lasche (12) angeordnet ist, wobei das Sensorelement (10) als ein radial nach außen weisender Vorsprung (11) ausgebildet ist.

2. Anschlussvorrichtung nach Anspruch 1,
**dadurch gekennzeichnet, dass** sich im Bereich der Stützhülse (6) zwischen der Umfangsdichtung (8) und dem Sensorelement (10) sowie im Bereich der Stützhülse (6) hinter dem Sensorelement (10) der Einsteckwiderstand auf einen Zwischenwiderstand vermindert, welcher größer ist als der Widerstandswert unmittelbar vor der Umfangsdichtung (8).

3. Anschlussvorrichtung nach Anspruch 1 oder 2,
**dadurch gekennzeichnet, dass** der Vorsprung (11) eine erste Vorsprungsfläche (11a) aufweist, die sich in einem Winkel (Z) zu einer, zu der Längsachse (X-X) der Anschlussvorrichtung (1) senkrechten Ebene, von einer radial äußeren Umfangsfläche (12a) der Lasche (12) radial nach außen erstreckt und einen überwindbaren Anschlag in Einsteckrichtung (E) für das Leitungsende (2a) darstellt.

4. Anschlussvorrichtung nach Anspruch 3,
**dadurch gekennzeichnet, dass** der Vorsprung (11) eine zweite Vorsprungsfläche (11b) aufweist, die sich in Einsteckrichtung (E) erstreckt und an die erste Vorsprungsfläche (11a) angrenzt, wobei die zweite Vorsprungsfläche (11b) in einem Abstand (Y) zu der Lasche (12) radial nach außen versetzt angeordnet ist.

5. Anschlussvorrichtung nach Anspruch 4,
**dadurch gekennzeichnet, dass** der Übergang (U1) von der äußeren Umfangsfläche (12a) der Lasche (12) auf die erste Vorsprungsfläche (11a) einen Radius aufweist.

6. Anschlussvorrichtung nach Anspruch 4 oder 5,
**dadurch gekennzeichnet, dass** der Übergang (U2) von der ersten Vorsprungsfläche (11a) auf die zweite Vorsprungsfläche (11b) einen Radius aufweist.

7. Anschlussvorrichtung nach einem der Ansprüche 1 bis 6 und einzusteckende Rohrleitung (2),
**dadurch gekennzeichnet, dass** die Lasche (12) an einen bestimmten Rohrleitungstyp angepasst ist, wobei die Abspreizhöhe (H) der Lasche (12) eine halbe Toleranz eines Innendurchmessers der einzusteckenden Rohrleitung (2) ist.

8. Anschlussvorrichtung nach einem der Ansprüche 1 bis 7 und Rohrleitung (2),
**dadurch gekennzeichnet, dass** die Laschen (12) den Einsteckwiderstand vor der Umfangsdichtung (8) auf einen Basiswert einstellen, wobei der Basiswert von dem Innendurchmesser der Rohrleitung (2) und der Abspreizhöhe (H) beeinflusst wird und aus dem Verhältnis des Hebelarms (L) zu der Abspreizhöhe (H) eingestellt werden kann, ab welcher Einstecktiefe der Einsteckwiderstand auf den Basiswert eingestellt werden soll.

9. Anschlussvorrichtung nach einem der Ansprüche 1 bis 8,
**dadurch gekennzeichnet, dass** die Stützhülse (6) als ein einteiliges Formteil ausgebildet ist und die Laschen (12) sowie das Sensorelement (10, 11) angeformt sind.

10. Anschlussvorrichtung nach einem der Ansprüche 1 bis 9,
**dadurch gekennzeichnet, dass** die Stützhülse (6) aus Glasfasermaterial besteht.

## Claims

1. Connection device (1) for pipelines (2), having a connection body (4) with a receiving opening for a pipeline (2) which is to be plugged by a line end (2a) in a plug-in direction (E), wherein a supporting sleeve (6) is arranged coaxially within the receiving opening in such a way that, during plugging in, the line end (2a) can be pushed onto a cylindrical outer surface (6a) of the supporting sleeve (6) by means of a mounting force, and a holding element (5) for fixing the plugged-in line end against extraction is mounted within the receiving opening, wherein at least one circumferential seal (8) is arranged within the connection body and outwardly seals a radial annular gap formed between the line end (2a) and the connection body (4), wherein the circumferential seal (8) generates a haptic signal in the form of a sudden increase in the plug-in resistance when the line end (2a) strikes the circumferential seal, wherein the supporting sleeve (6) has at least one sensor element (10), wherein the supporting sleeve (6) forms a pipe stop (14) which cannot be overcome in the plug-in direction (E) behind the sensor element (10, 11),
**characterized in that**
the sensor element generates a second haptic signal in the form of a sudden increase in the plug-in resistance dependent on a plug-in depth of the line end (2a) in the plug-in direction (E) behind the circumferential seal (8) within the connection body (4), the supporting sleeve (6) has one or more radially elastic tabs (12) which extend in the plug-in direction (E) and which project radially outwardly from the cylindrical outer surface (6a) of the supporting sleeve (6) with a splaying height (H) with respect to the plug-in direction, and the sensor element (10) is arranged on at least one free end on the outer circumference of at least one tab (12), wherein the sensor element (10) is designed as a radially outwardly pointing projection (11).

2. Connection device according to Claim 1,
**characterized in that,** in the region of the supporting sleeve (6) between the circumferential seal (8) and the sensor element (10), and in the region of the supporting sleeve (6) behind the sensor element (10), the plug-in resistance is reduced to an intermediate resistance which is greater than the resistance value directly in front of the circumferential seal (8).

3. Connection device according to Claim 1 or 2, **characterized in that** the projection (11) has a first projection surface (11a) which extends radially outwardly from a radially outer circumferential surface (12a) of the tab (12) at an angle (Z) to a plane perpendicular to the longitudinal axis (X-X) of the connection device (1) and which constitutes a stop which can be overcome in the plug-in direction (E) for the line end (2a).

4. Connection device according to Claim 3, **characterized in that** the projection (11) has a second projection surface (11b) which extends in the plug-in direction (E) and adjoins the first projection surface (11a), wherein the second projection surface (11b) is arranged so as to be radially outwardly offset at a distance (Y) from the tab (12) .

5. Connection device according to Claim 4, **characterized in that** the transition (U1) from the outer circumferential surface (12a) of the tab (12) to the first projection surface (11a) has a radius.

6. Connection device according to Claim 4 or 5, **characterized in that** the transition (U2) from the first projection surface (11a) to the second projection surface (11b) has a radius.

7. Connection device according to one of Claims 1 to 6 and pipeline (2) to be plugged in,
**characterized in that** the tab (12) is adapted to a specific pipeline type, wherein the splaying height (H) of the tab (12) is half the tolerance of an inside diameter of the pipeline (2) to be plugged in.

8. Connection device according to one of Claims 1 to 7 and pipeline (2),
**characterized in that** the tabs (12) set the plug-in resistance in front of the circumferential seal (8) to a base value, wherein the base value is influenced by the inside diameter of the pipeline (2) and the splaying height (H), and the plug-in depth starting from which the plug-in resistance is to be set to the base value can be set from the ratio of the lever arm (L) to the splaying height (H) .

9. Connection device according to one of Claims 1 to 8,
**characterized in that** the supporting sleeve (6) takes the form of a one-piece moulded part, and the tabs (12) and also the sensor element (10, 11) are integrally formed thereon.

10. Connection device according to one of Claims 1 to 9,
**characterized in that** the supporting sleeve (6) consists of glass-fibre material.

## Revendications

1. Dispositif de raccordement (1) pour conduites tubulaires (2), comportant un corps de raccordement (4) doté d'une ouverture de réception pour une conduite tubulaire (2) à insérer par une extrémité de conduite (2a) dans une direction d'insertion (E), un manchon de soutien (6) étant disposé coaxialement à l'intérieur de l'ouverture de réception, de telle sorte que, lors de l'insertion, l'extrémité de conduite (2a) peut être enfilée sur une surface extérieure (6a) cylindrique du manchon de soutien (6) grâce à une force de montage, et un élément de maintien (5) servant à la fixation de l'extrémité de conduite insérée étant monté à l'intérieur de l'ouverture de réception de manière à empêcher l'extraction, au moins un joint d'étanchéité périphérique (8) étant disposé à l'intérieur du corps de raccordement, lequel joint d'étanchéité assure l'étanchéité, vers l'extérieur, d'un interstice annulaire formé radialement entre l'extrémité de conduite (2a) et le corps de raccordement (4), le joint d'étanchéité périphérique (8) produisant un signal haptique sous la forme d'une augmentation brusque de la résistance à l'insertion lorsque l'extrémité de conduite (2a) vient en contact avec le joint d'étanchéité périphérique, le manchon de soutien (6) comprenant au moins un élément de détection (10), le manchon de soutien (6) formant une butée de tube (14) infranchissable derrière l'élément de détection (10, 11) dans la direction d'insertion (E),
**caractérisé en ce que**
l'élément de détection produit un deuxième signal haptique sous la forme d'une augmentation brusque de la résistance à l'insertion en fonction d'une profondeur d'insertion de l'extrémité de conduite (2a) dans la direction d'insertion (E) derrière le joint d'étanchéité périphérique (8) à l'intérieur du corps de raccordement (4), le manchon de soutien (6) comprend une ou plusieurs languettes (12) radialement élastiques, s'étendant dans la direction d'insertion (E) et faisant saillie vers l'extérieur avec une hauteur d'écartement (H) radialement à partir de la surface extérieure (6a) cylindrique du manchon de soutien (6) par rapport à la direction d'insertion et l'élément de détection (10) est disposé à au moins une extrémité libre à la périphérie extérieure d'au moins une languette (12), l'élément de détection (10) étant réalisé sous la forme d'une saillie (11) tournée radialement vers l'extérieur.

2. Dispositif de raccordement selon la revendication 1, **caractérisé en ce que**, dans la région du manchon de soutien (6) entre le joint d'étanchéité périphérique (8) et l'élément de détection (10) ainsi que dans la région du manchon de soutien (6) derrière l'élément de détection (10), la résistance à l'insertion est réduite à une résistance intermédiaire qui est supérieure à la valeur de résistance directement devant le joint d'étanchéité périphérique (8).

3. Dispositif de raccordement selon la revendication 1 ou 2,
**caractérisé en ce que** la saillie (11) comprend une première surface de saillie (11a) qui s'étend radialement vers l'extérieur à partir d'une surface périphérique (12a) radialement extérieure de la languette (12) suivant un angle (Z) par rapport à un plan perpendiculaire à l'axe longitudinal (X-X) du dispositif de raccordement (1), et constitue une butée pouvant être franchie pour l'extrémité de conduite (2a) dans la direction d'insertion (E).

4. Dispositif de raccordement selon la revendication 3, **caractérisé en ce que** la saillie (11) comprend une deuxième surface de saillie (11b) qui s'étend dans la direction d'insertion (E) et est adjacente à la première surface de saillie (11a), la deuxième surface de saillie (11b) étant disposée de manière décalée radialement vers l'extérieur à une distance (Y) par rapport à la languette (12) .

5. Dispositif de raccordement selon la revendication 4, **caractérisé en ce que** la transition (U1) à partir de la surface périphérique (12a) extérieure de la languette (12) vers la première surface de saillie (11a) présente un rayon.

6. Dispositif de raccordement selon la revendication 4 ou 5,
**caractérisé en ce que** la transition (U2) à partir de la première surface de saillie (11a) vers la deuxième surface de saillie (11b) présente un rayon.

7. Dispositif de raccordement selon l'une des revendications 1 à 6 et conduite tubulaire (2) à insérer, **caractérisé en ce que** la languette (12) est adaptée à un certain type de conduite tubulaire, la hauteur d'écartement (H) de la languette (12) étant la moitié d'une tolérance d'un diamètre intérieur de la conduite tubulaire (2) à insérer.

8. Dispositif de raccordement selon l'une des revendications 1 à 7 et conduite tubulaire (2), **caractérisé en ce que** les languettes (12) règlent la résistance à l'insertion devant le joint d'étanchéité périphérique (8) à une valeur de base, la valeur de base étant influencée par le diamètre intérieur de la conduite tubulaire (2) et la hauteur d'écartement (H) et, à partir du rapport du bras de levier (L) à la hauteur d'écartement (H), on peut régler à partir de quelle profondeur d'insertion la résistance à l'insertion doit être réglée à la valeur de base.

9. Dispositif de raccordement selon l'une des revendications 1 à 8,
**caractérisé en ce que** le manchon de soutien (6) est réalisé sous la forme d'une pièce moulée d'un seul tenant et les languettes (12) ainsi que l'élément de détection (10, 11) sont moulés.

10. Dispositif de raccordement selon l'une des revendications 1 à 9,
**caractérisé en ce que** le manchon de soutien (6) est constitué de matériau en fibres de verre.
